# EUROPÄISCHE PATENTSCHRIFT

(11) **EP 3 910 229 B1**
(45) Veröffentlichungstag und Bekanntmachung des Hinweises auf die Patenterteilung: **19.02.2025**
(21) Anmeldenummer: 20212615.7
(22) Anmeldetag: 09.12.2020
(51) Int. Cl.: F16P 3/14

(54) **ÜBERWACHUNGSEINRICHTUNG**
MONITORING DEVICE
DISPOSITIF DE SURVEILLANCE

(30) Priorität: 14.05.2020 DE 202020102720 U
(43) Veröffentlichungstag der Anmeldung: 17.11.2021
(73) Patentinhaber: Leuze electronic GmbH + Co. KG, 73277 Owen/Teck (DE)
(72) Erfinder: Brunner, Rolf, 82223 Eichenau (DE); Feller, Bernhard, 86316 Friedberg (DE); Jüttner, Andreas, 81543 München (DE); Mohr, Stefan, 80686 München (DE); Rauscher, Thorsten, 81379 München (DE)
(74) Vertreter: Ruckh, Rainer Gerhard

(56) Entgegenhaltungen:
- DE-A1- 102008 004 941
- DE-B3- 102016 116 733
- US-A1- 2016 097 878

## Beschreibung

Die Erfindung betrifft eine Überwachungseinrichtung gemäß dem Oberbegriff des Anspruchs 1.

Derartige Überwachungseinrichtungen werden im Bereich der Sicherheitstechnik eingesetzt, wobei generell mit dem Sicherheitssensor eine Gefahrenbereichsüberwachung einer gefahrbringenden Anlage durchgeführt wird, wobei der Begriff Anlage generell auch Maschinen, Roboter und dergleichen erfasst.

Insbesondere wird die Überwachungseinrichtung als Zugangssicherung zu einem Gefahrenbereich einer Anlage eingesetzt, wobei der Zugang zu dem Gefahrenbereich über eine Fördereinrichtung erfolgt.

Die Überwachungseinrichtung weist typischerweise als Sicherheitssensor einen Lichtvorhang auf, mit dem ein in einer Ebene liegendes Schutzfeld überwacht wird. Der Lichtvorhang generiert ein Schaltsignal, dessen Schaltzustände angeben ob ein Objekt im Schutzfeld vorhanden ist oder nicht. Wird mit dem Lichtvorhang ein Objekt im Schutzfeld detektiert wird durch das entsprechende Schaltsignal als Objektfeststellungssignal eine Sicherheitsfunktion ausgelöst. Beispielsweise wird mit dem Schaltsignal einer Steuereinheit der Anlage angesteuert, wodurch diese stillgesetzt wird, sodass keine Gefahren mehr von der Anlage ausgehen können.

Auf der Fördereinrichtung werden generell auch zulässige Objekte wie auf Paletten gelagerte Transportgüter der Anlage zugeführt, die zur Durchführung von Arbeitsvorgängen der Anlage benötigt werden. Da derartige zulässige Objekte nicht sicherheitskritisch sind, würde eine Auslösung der Sicherheitsfunktion bei der Bewegung zulässiger Objekte durch das Schutzfeld des Lichtvorhangs zu einem unnötigen Stillstand der Maschine führen.

Um dies zu vermeiden sind bei bekannten Überwachungseinrichtungen in Förderrichtung der Fördereinrichtung dem Sicherheitssensor Mutingsensoren vorgeordnet. Wird mit den Mutingsensoren ein Objekt als zulässiges Objekt erkannt, wird der Sicherheitssensor für eine vorgegebene Zeitdauer überbrückt, sodass dieser nicht mehr zur Auslösung der Sicherheitsfunktion führt, wenn das zulässige Objekt das Schutzfeld passiert.

Derartige Mutingsensoren sind typischerweise von Lichtschrankenanordnungen gebildet. Mit derartigen Lichtschrankenanordnungen können zulässige Objekte oft nicht zuverlässig erkannt werden.

Weiterhin ist bei derartigen Überwachungseinrichtungen nachteilig, dass die dem Sicherheitssensor vorgeordneten Mutingsensoren einen erheblichen Raumbedarf beanspruchen.

Zudem ist nachteilig, dass die Abstimmung des Timings und der Auswertung der Signale der Mutingsensoren aufwändig und fehleranfällig ist, da aus den Zeitpunkten der Objektdetektionen der Mutingsensoren hochgerechnet werden muss, welche Zeitspanne vergeht, bis das zulässige Objekt tatsächlich den Sicherheitssensor passiert hat.

Die DE 10 2016 116 733 B3 betrifft eine Signalverarbeitungseinheit und Verfahren zur Erzeugung eines Ausgangssignals an einem Ausgangsanschluss mit einem Kabel mit mindestens zwei Signalleitern, wobei ein erstes Sensorsignal eines ersten Sensors an einem ersten Eingangsanschluss anliegt und ein zweites Sensorsignal eines zweiten Sensors an einem zweiten Eingangsanschluss anliegt, wobei die Eingangsanschlüsse jeweils mit einem Kabel verbunden sind, wobei eine Steuer- und Auswerteeinheit angeordnet ist, wobei die Steuer- und Auswerteeinheit eine Signaländerung bei einem ersten Sensorsignal eines ersten Sensors erzeugt bei einer Flanke oder Signaländerung eines zweiten Sensorsignals eines zweiten Sensors, wobei die Signaländerung des ersten Sensorsignals eine vorgegebene Zeitdauer aufrechterhalten wird, wobei die Steuer- und Auswerteeinheit das erste geänderte Sensorsignal und das zweite Sensorsignal jeweils auf den Signalleitern des Ausgangsanschlusses ausgibt.

Die DE 10 2008 004 941 A1 betrifft eine Sicherheitsanordnung zur Überwachung eines Durchgangs, durch den nur zulässige Objekte in wenigstens eine Bewegungsrichtung befördert werden, mit einem ersten optoelektronischen Sensor, der wenigstens einen Lichtsender und wenigstens einen Lichtempfänger aufweist zur Überwachung eines ebenen, in dem Durchgang angeordneten Schutzfelds auf Durchtritt durch das Objekt, mit wenigstens einer Steuer- und Auswerteeinheit, durch die bei Durchtritt eines unzulässigen Objektes ein Warn- oder Steuersignal ableitbar ist und mit einem Muting-Sensor, welcher in Bewegungsrichtung vor dem Durchgang angeordnet und mit der Steuer- und Auswerteeinheit zur rechtzeitigen Deaktivierung des Schutzfeldes bei zulässigen Objekten verbunden ist. Um eine Vorrichtung bereitzustellen, die eine hohe Zuverlässigkeit mit einem geringeren Aufwand gewährleistet, wird vorgeschlagen, dass in der Steuer- und Auswerteeinheit Mittel zur Bestimmung und Auswertung einer Objektgeschwindigkeit vorhanden sind und dass abhängig von einer Objektdetektion durch den Muting-Sensor und abhängig von der Objektgeschwindigkeit das Warn- oder Steuersignal für einen berechneten Zeitpunkt und für eine berechnete Dauer unterdrückbar ist und zwar von dem Zeitpunkt des Einfahrens des Objektes in das Schutzfeld bis zum Verlassen des Schutzfeldes.

Der Erfindung liegt die Aufgabe zugrunde eine Überwachungseinrichtung der eingangs genannten Art bereitzustellen, welche bei konstruktiv einfachem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor, welcher zur Überwachung eines Schutzfelds derart ausgebildet ist, dass bei einem im Schutzfeld registrierten Objekteingriff ein internes Objektfeststellungssignal generiert wird. Weiterhin sind wenigstens eine ein Beeinflussungssignal generierende Signalquelle sowie eine Steuer- und Auswerteeinheit vorgesehen, mittels derer das interne Objektfeststellungssignal derart verzögerbar ist, dass dieses abhängig vom Beeinflussungssignal beeinflussbar ist. Das beeinflusste interne Objektfeststellungssignal ist als externes Objektfeststellungssignal am Sicherheitssensor ausgebbar.

Der Grundgedanke der Erfindung besteht somit darin, das im Sicherheitssensor generierte interne Objektfeststellungssignal so relativ zu dem Beeinflussungssignal zu verzögern, dass abhängig vom Beeinflussungssignal das interne Objektfeststellungssignal beeinflusst werden kann, um so ein vom Beeinflussungssignal abhängiges, gegebenenfalls geändertes externes Objektfeststellungssignal zu generieren, das dann über den Sicherheitssensor ausgegeben wird.

Wird mit dem Sicherheitssensor im Schutzfeld ein Objekt erfasst, so wird im Regelfall ein internes Objektfeststellungssignal generiert, das in dieser Form auch als externes Objektfeststellungssignal ausgegeben wird, worauf eine Sicherheitsfunktion ausgelöst wird. Beispielsweise besteht die Sicherheitsfunktion darin, eine mit dem Sicherheitssensor überwachte Anlage abzuschalten, das heißt stillzusetzen, so dass von dieser keine Gefahren mehr ausgehen können.

Mit den mittels der oder den Signalquellen generierten Beeinflussungssignalen kann erfindungsgemäß das interne Objektfeststellungssignal beeinflusst, insbesondere geändert werden, so dass das ausgegebene externe Objektfeststellungssignal gegenüber dem internen Objektfeststellungssignal geändert ist. Damit kann die Überwachungsfunktion des Sicherheitssensors flexibel an sich ändernde Gefahrensituationen angepasst sein. Hierbei ist eine Verzögerung des internen Objektfeststellungssignal wesentlich, da dann das Beeinflussungssignal von den internen Objektfeststellungssignalen vorhanden ist und somit das interne Objektfeststellungssignal abhängig vom Beeinflussungssignal verändert werden kann.

Als Signalquelle zur Generierung des Beeinflussungssignals kann beispielsweise eine Steuerung vorgesehen sein, die insbesondere eine Anlagenkomponente wie eine Fördereinheit, die Transportgüter einer zu überwachenden Anlage zuführt, steuert.

Besonders vorteilhaft sind zur Ausbildung der oder aller Signalquellen Sensoren vorgesehen. Insbesondere sind die Signalquellen von optischen Sensoren, Ultraschallsensoren, oder Radarsensoren gebildet.

Dabei können die Signalquellen von Distanzsensoren, Lichtschranken, Reflexionslichtschranken, Lichtvorhängen oder Codelesern gebildet sein.

Zur Erhöhung der Sicherheit der Überwachungseinrichtung ist es zweckmäßig, wenn Mittel zur Funktionsprüfung der oder jeder Signalquellen vorgesehen sind.

Damit wird eine Fehlerkontrolle der Signalquellen ermöglicht.

Sind beispielsweise die Signalquellen als Distanzsensoren ausgebildet, so können deren Signalwerte, wenn kein zulässiges Objekt detektiert wird, zu einem Selbsttest dieser Sensoren genutzt werden.

Gemäß einer besonders vorteilhaften Ausführungsform der Erfindung wird mit dem Beeinflussungssignal eine Mutingfunktion realisiert, das heißt mittels der oder aller Signalquellen werden zulässige Objekte erfasst.

In diesem Fall werden mit den Signalquellen zulässige Objekte, die nicht zu einer Gefahrensituation bei einer mit dem Sicherheitssensor überwachten Anlage führen, erkannt, wobei bei Erkennung eines zulässigen Objekts das Beeinflussungssignal generiert wird.

Zur Generierung des Beeinflussungssignals kann im einfachsten Fall eine Signalquelle, insbesondere ein Sensor ausreichend sein.

Bevorzugt können mehrere Sensoren als Signalquellen vorgesehen sein, deren Signale gemeinsam ausgewertet werden, insbesondere um die Geometrie eines zulässigen Objekts zu erfassen. Alternativ können zulässige Objekte anhand von Kennungen, Codes und dergleichen erfasst werden, wobei dann als Sensoren Codeleser verwendet werden können.

Generell ist es entscheidend, dass das interne Objektfeststellungssignal gegenüber dem Beeinflussungssignal so verzögert wird, dass es so auf das Beeinflussungssignal folgt, dass die Erkennung eines zulässigen Objekts abgeschlossen ist, bevor das interne Objektfeststellungssignal generiert wird, so dass damit das Beeinflussungssignal das interne Objektfeststellungssignal beeinflussen kann.

Zur besseren zeitlichen Abstimmung der Signalfolgen ist in der Steuer- und Auswerteeinheit des Beeinflussungssignals verzögerbar.

Gemäß einer konstruktiv besonders zweckmäßigen und einfachen Ausgestaltung ist als Mittel zur Signalverzögerung ein FIFO-Element vorgesehen.

Mit der Bereitstellung der Mutingfunktion wird ein unnötiges Stillsetzen einer mit dem Sicherheitssensor überwachten Anlage vermieden, wenn zulässige Objekte, wie zum Beispiel der Anlage zuzuführende Transportgüter, durch das Schutzfeld in den Gefahrenbereich der Anlage gefördert werden. Die Mutingfunktion sieht vor, dass dann, wenn mit den Signalquellen, das heißt den Mutingsensoren der Überwachungseinrichtung ein zulässiges Objekt erkannt wird, der Sicherheitssensor zumindest partiell überbrückt, das heißt gemutet wird, sodass das Transportgut das Schutzfeld passieren kann, ohne dass der Sicherheitssensor die Sicherheitsfunktion auslöst.

Bei einem vollständigen Muting ist der gesamte Sicherheitssensor überbrückt. Bei einem partiellen Muting wird nur der Teil des Schutzfeldes überbrückt, in dem das zulässige Objekt erwartet beziehungsweise detektiert wird.

Gemäß einer vorteilhaften Ausgestaltung der Erfindung wird mittels des Sicherheitssensors ein in einer Ebene verlaufendes Schutzfeld überwacht.

Besonders vorteilhaft ist dann der Sicherheitssensor ein Flächendistanzsensor oder ein Lichtvorhang.

Der Begriff Lichtvorhang umfasst dabei auch Reflexions-Lichtvorhänge, Lichtgitter und auch diskrete Anordnungen von Lichtschranken oder Reflexionslichtschranken. Generell bildet der Lichtvorhang ein mehrstrahliges System mit von Lichtstrahlen gebildeten Strahlachsen, die das flächige Schutzfeld definieren. Flächendistanzsensoren sind generell scannende Distanzsensoren, bei welchen bevorzugt Distanzmessungen nach einem Impuls-Laufzeitverfahren oder Phasenmessverfahren erfolgen. Eine Überwachung eines flächigen Schutzfeldes wird dadurch erreicht, dass vom Sender des Distanzsensors emittierte Sendelichtstrahlen über eine um eine Drehachse drehbare Ablenkeinheit abgelenkt werden. Alternativ kann der Distanzsensor in einem rotierenden Messkopf integriert sein.

Zur Bereitstellung einer Mutingfunktion ist vorteilhaft als Signalquelle wenigstens ein Mutingsensor vorgesehen.

Besonders vorteilhaft ist der oder jeder Mutingsensor in der Ebene des Schutzfelds angeordnet.

Die Mutingsensoren benötigen damit keinen separaten Raumbedarf für die Installation der Überwachungseinrichtung, sondern können insbesondere platzsparend im Sicherheitssensor selbst untergebracht werden.

Gemäß einer besonders einfachen Ausgestaltung ist der Mutingsensor vom Sicherheitssensor oder von Elementen des Sicherheitssensors gebildet.

Für den Fall, dass der Sicherheitssensor als Lichtvorhang ausgebildet ist, können einzelne oder alle Strahlachsen dieses Lichtvorhangs einen Mutingsensor ausbilden.

Gemäß einer alternativen Ausgestaltung sind separate Sensoren als Mutingsensor vorgesehen.

In diesem Fall können der oder jeder Mutingsensor in einem Gehäuse des Sicherheitssensor angeordnet sein.

Damit beanspruchen die Mutingsensoren keinen zusätzlichen Raumbedarf, das heißt die Überwachungseinrichtung weist eine kompakte Bauform auf.

Da die Mutingsensoren mit dem Sicherheitssensor in einer Ebene angeordnet sind, generieren die Mutingsensoren zeitgleich mit dem Sicherheitssensor Signale. Durch die erfindungsgemäße Verzögerung des im Sicherheitssensor generierten internen Objektfeststellungssignals ist gewährleistet, dass das Beeinflussungssignal vor dem internen Objektfeststellungssignal generiert, so dass damit mit dem Beeinflussungssignal das interne Objektfeststellungssignal beeinflusst werden kann um daraus das auszugebende externe Objektfeststellungssignal zu generieren.

Wird mit den Mutingsensoren kein zulässiges Objekt erkannt, wird kein Beeinflussungssignal generiert und die Überwachungsfunktion des Sicherheitssensors bleibt aktiviert. Wird dann mit dem Sicherheitssensor ein Objekteingriff im Schutzfeld registriert und darauf das interne Objektfeststellungssignal generiert, wird dieses auch als externes Objektfeststellungssignal ausgegeben, worauf die Sicherheitsfunktion ausgelöst, beispielsweise die mit dem Sicherheitssensor überwachte Anlage stillgesetzt, in dem dieses externe Objektfeststellungssignal an die Steuerung der Anlage ausgegeben wird.

Wird dagegen mit den Mutingsensoren ein zulässiges Objekt erkannt, so wird ein Beeinflussungssignal generiert mit dem die Mutingfunktion aktiviert wird. Der Sicherheitssensor wird derart gemutet, dass durch das Beeinflussungssignal das interne Objektfeststellungssignal bei Registrieren eines Objekteingriffs im Schutzfeld mittels des Sicherheitssensors dieser überbrückt wird, das heißt abhängig zum Beeinflussungssignal wird aus dem internen Objektfeststellungssignal ein externes Objektfeststellungssignal derart generiert, dass keine Sicherheitsfunktion ausgelöst wird.

Die Erfindung wird im Folgenden anhand der Zeichnungen erläutert. Es zeigen:
- Figur 1:: Beispiel einer erfindungsgemäßen Überwachungseinrichtung als Zugangssicherung zu einem Gefahrenbereich einer Anlage.
- Figur 2:: Einzeldarstellung der Überwachungseinrichtung gemäß Figur 1 in einer Seitenansicht.
- Figur 3:: Beispiel einer Erfassung eines Transportguts mit der Überwachungseinrichtung gemäß Figur 1.
- Figur 4:: Alternative Ausgestaltung der Überwachungseinrichtung gemäß Figur 1.
- Figur 5:: Schemtische Darstellung einer Steuer- und Auswerteeinheit für die Überwachungseinrichtung gemäß Figur 1.
- Figur 6:: Zeitliche Verläufe von in der Steuer- und Auswerteeinheit gemäß Figur 5 ausgewerteten und generierten Signalen.
- Figur 7:: Beispiel einer Förderung eines Transportguts für die Überwachungseinrichtung gemäß Figur 1.
- Figur 8, 9:: Beispiele einer Transportguterfassung für die Überwachungseinrichtung gemäß Figur 1.

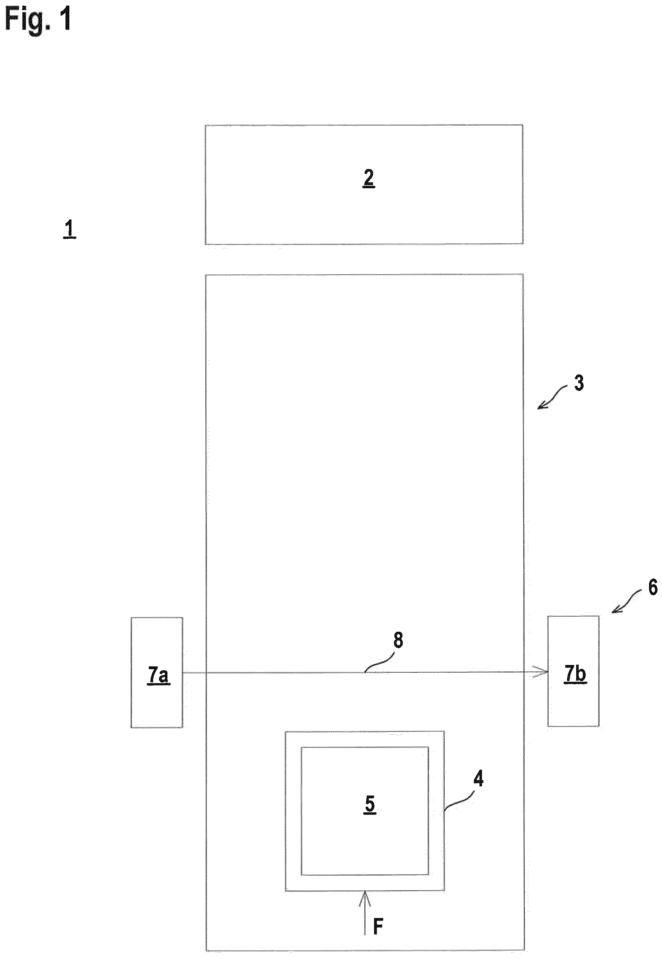

Figur 1 zeigt schematisch ein Beispiel der erfindungsgemäßen Überwachungseinrichtung 1. Die Überwachungseinrichtung 1 wird im vorliegenden Fall als Zugangssicherung für einen Gefahrenbereich an einer gefahrbringenden Anlage 2 eingesetzt. Der Zugang zum Gefahrenbereich erfolgt über eine Fördereinrichtung 3, deren Förderband in der mit F gekennzeichneten Bewegungsrichtung bewegt wird, um auf Paletten 4 angeordnete Transportgüter 5 in den Gefahrenbereich zu fördern. Natürlich können auf dieselbe Weise Transportgüter 5 aus dem Gefahrenbereich herausgeführt werden. Die Fördereinrichtung 3 und/oder der Gefahrenbereich 2 können durch seitlich angebrachte Umzäunungen geschützt werden.

Die Überwachungseinrichtung 1 umfasst einen Sicherheitssensor 6 in Form eines optischen Sensors. Dieser kann beispielsweise als Flächendistanzsensor ausgebildet sein. Im vorliegenden Fall ist der Sicherheitssensor 6 als Lichtvorhang ausgebildet.

Der Lichtvorhang weist in einem ersten Gehäuse 7a eine Reihenanordnung von Lichtstrahlen 8 emittierenden Sendern 9 und in einem zweiten Gehäuse 7b eine Reihenanordnung von Empfängern 10 auf. Die Lichtstrahlen 8 spannen ein flächiges Schutzfeld auf, das in einer vertikalen Ebene orientiert ist und damit senkrecht zur horizontalen Oberfläche des Förderbands der Fördereinrichtung 3 verläuft.

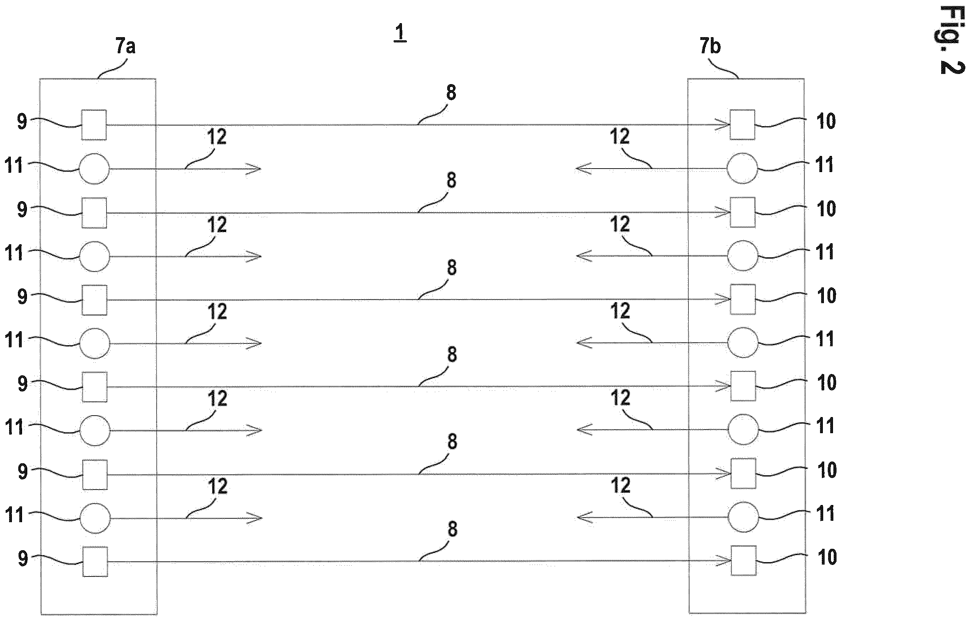

Die Sender 9 (Figur 2) werden einzeln nacheinander zyklisch mittels einer nicht dargestellten Sendersteuerung aktiviert. Die Empfänger 10 (Figur 2) werden in bekannter Weise optisch auf die Sender 9 synchronisiert.

Die in den Empfängern 10 generierten Empfangssignale werden in einer nicht dargestellten Auswerteeinheit zur Generierung eines Objektfeststellungssignals in Form eines binären Schaltsignals ausgewertet. Die Schaltzustände des Schaltsignals geben an, ob sich ein Objekt im Schutzfeld befindet oder nicht. Bei freiem Schutzfeld treffen die Lichtstrahlen 8 aller Sender 9 ungehindert auf den zugeordneten Empfänger 10. Bei einem Objekteingriff im Schutzfeld werden durch das Objekt die Lichtstrahlen 8 wenigstens eines Senders 9 unterbrochen. Zur Erfüllung der sicherheitstechnischen Anforderungen weist die Auswerteeinheit einen redundanten, vorzugsweise zweikanaligen Aufbau auf.

Wird mit dem Sicherheitssensor 6 ein Objekteingriff im Schutzfeld registriert, wird durch das Schaltsignal eine Sicherheitsfunktion ausgelöst, insbesondere die gefahrbringende Anlage 2 stillgesetzt.

Um ein unnötiges Stillsetzen der Anlage 2 zu vermeiden, kann der Sicherheitssensor 6 in Abhängigkeit von Mutingsignalen von Mutingsensoren 11 (Figur 2), die allgemein Signalquellen bilden, überbrückt werden, wenn mit diesen in zulässiges Objekt wie zum Beispiel ein auf einer Palette 4 gelagertes Transportgut 5 erkannt wird (Figur 2). Durch die Überbrückung des Sicherheitssensors 6 löst dieser keine Sicherheitsfunktion aus, wenn das zulässige Objekt das Schutzfeld passiert und das Transportgut 5 kann der Anlage 2 zugeführt werden, ohne dass diese stillgesetzt wird.

Bei der Ausführungsform gemäß Figur 2 sind als Mutingsensoren 11, Distanzsensoren vorgesehen, die in der Ebene des Schutzfelds angeordnet sind. Im vorliegenden Fall sind die Mutingsensoren 11 in den Gehäusen 7a, 7b des Lichtvorhangs integriert, was jedoch nicht zwingend der Fall ist.

Prinzipiell können die Distanzsensoren als Ultraschallsensoren, Radarsensoren oder dergleichen ausgebildet sein. Im vorliegenden Fall sind die Distanzsensoren als optische Sensoren, die in Form von Lichttastern derart ausgebildet sind, dass von einem Distanzsensor emittierte Sendelichtstrahlen 12 als Empfangslichtstrahlen von einem Objekt zurück zum Distanzsensor reflektiert werden. Dabei können die Distanzsensoren nach einem Puls-Laufzeit-verfahren, einem Phasenmessverfahren oder einem Triangulationsverfahren arbeiten. Wie aus Figur 2 ersichtlich, verlaufen die Strahlachsen der Sendelichtstrahlen 12 senkrecht zu den Längsachsen der Gehäuse 7a, 7b, also in der gleichen Ebene wie das Schutzfeld.

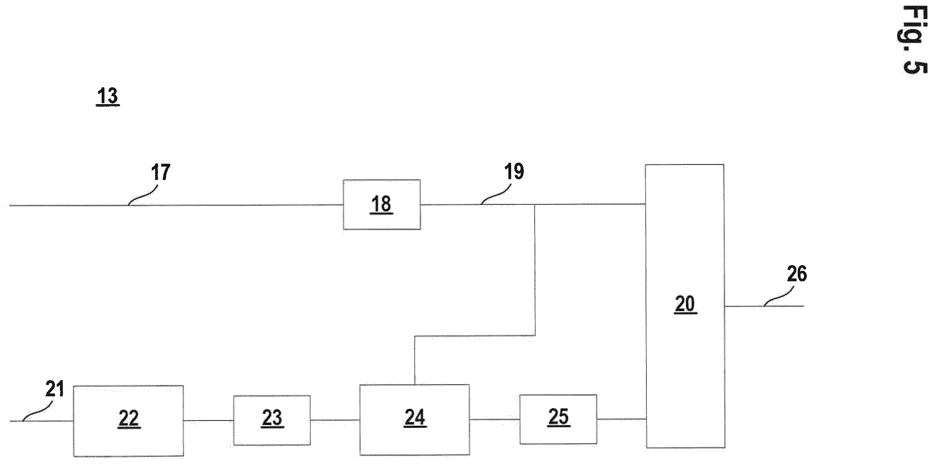

Die Messwerte der Mutingsensoren 11 werden zur Generierung von Mutingsignalen in einer Steuer- und Auswerteeinheit 13 zugeführt, deren Aufbau in Figur 5 dargestellt ist. Prinzipiell kann die Auswerteeinheit des Lichtvorhangs die Funktion der Rechnereinheit übernehmen.

Die von den Transportgütern 5 gebildeten zulässigen Objekte werden durch mittels der Mutingsensoren 11 erkannt.

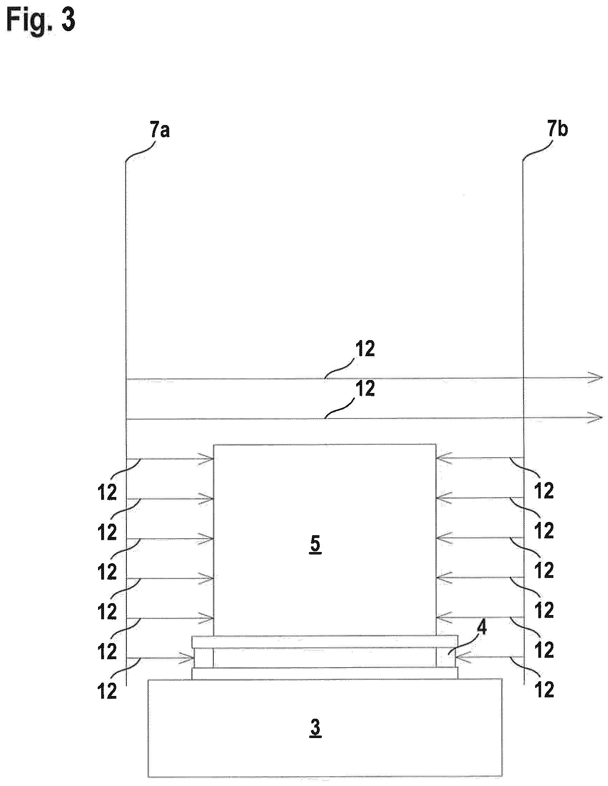

Ein Beispiel hierfür zeigt Figur 3. Wie dort dargestellt, wird mit den im ersten Gehäuse 7a angeordneten Mutingsensoren 11 die komplette linke Seitenkontur des Transportguts 5 und auch die Seitenkontur der Palette 4 erfasst. Entsprechend wird mit den im zweiten Gehäuse 7b angeordneten Mutingsensoren 11 die komplette rechte Seitenkontur des Transportguts 5 und der Palette 4 erfasst.

Mit den als Distanzsensoren ausgebildeten Mutingsensoren 11 wird während des Transports auf der Fördereinrichtung 3 das gesamte Transportgut 5 mit der kompletten Palette 4 detektiert.

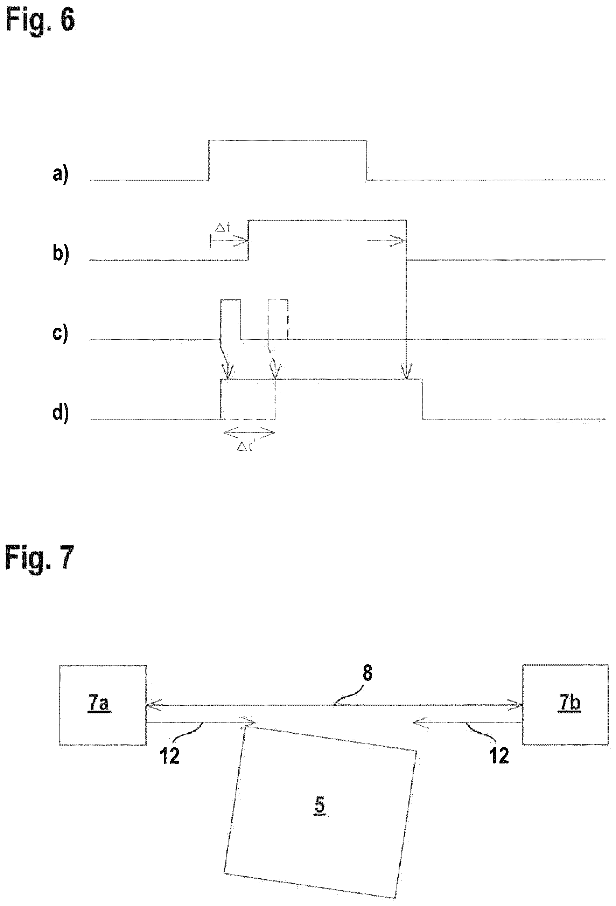

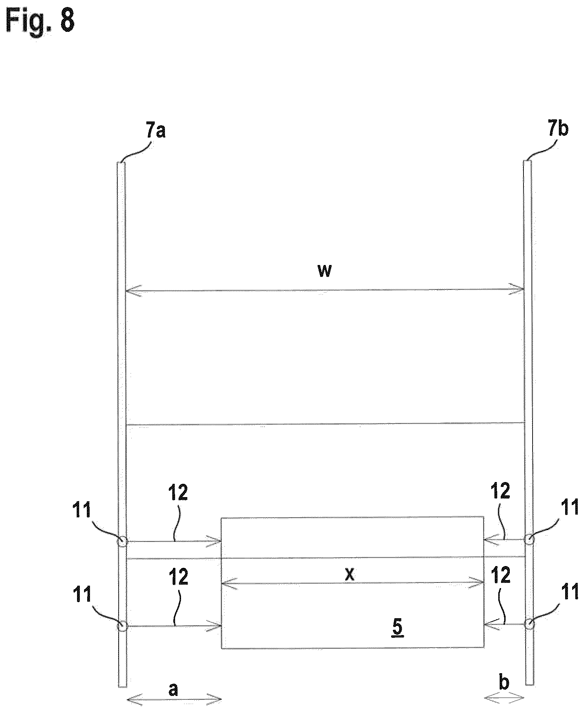

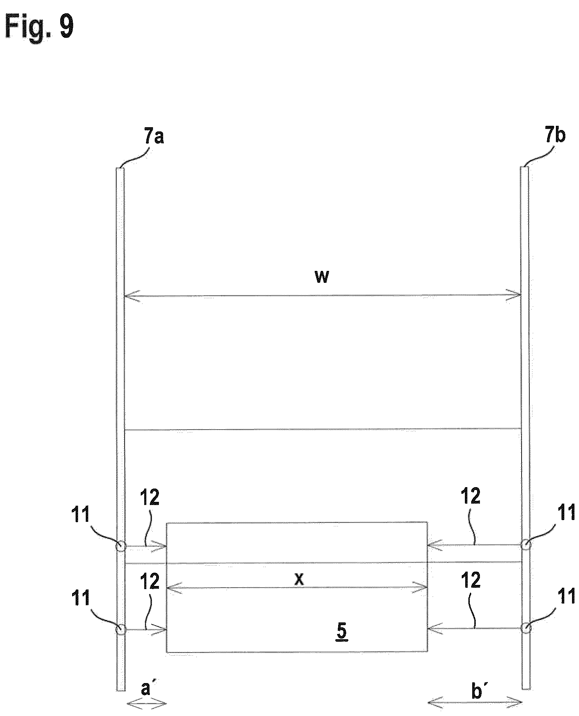

Wie die Figuren 8 und 9 zeigen, kann mit den Mutingsensoren 11 bei bekanntem Abstand W der Gehäuse 7a, 7b des Sicherheitssensors 6 ein Transportgut 5 der Breite x unabhängig von dem Versatz des Transportguts 5 zur Mitte der Fördereinrichtung 3 bestimmt werden, in dem die Abstände a, b (Figur 7) beziehungsweise a', b' (Figur 8) der linken beziehungsweise rechten Seitenkontur des Transportguts 5 zu den Mutingsensoren 11 bestimmt werden.

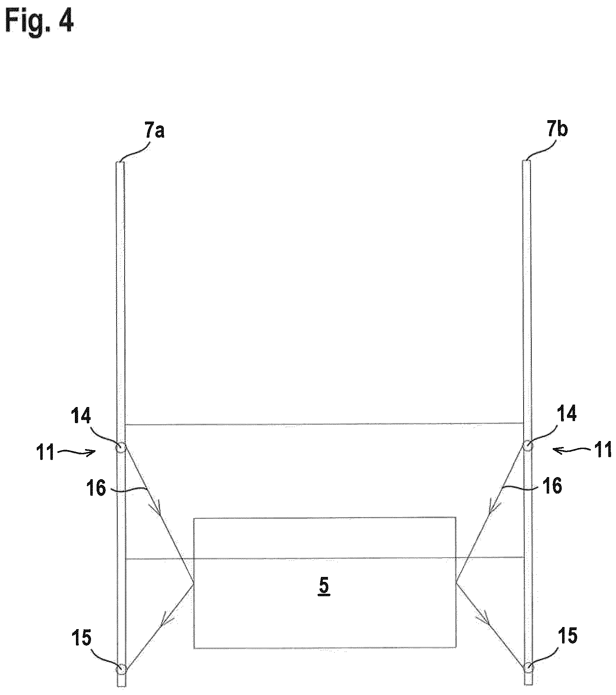

Figur 4 zeigt eine alternative Ausgestaltung von Mutingsensoren 11 in Form von Ultraschallsensoren 14, welche räumlich getrennt angeordnete Ultraschallsender 14 und Ultraschallempfänger 15 aufweisen, so dass die vom jeweiligen Ultraschallsender 14 ermittelten Ultraschallwellen 16 schräg verlaufend auf das Transportgut 5 geführt sind und von dort zum Ultraschallsender 14 reflektiert werden.

Alternativ können auch entsprechende optische Sensoren oder Radarsensoren vorgesehen sein.

Figur 5 zeigt schematisch den Aufbau der Steuer- und Auswerteeinheit 13 der Überwachungseinrichtung 1 gemäß Figur 1. Das im Sicherheitssensor 6 generierte Objektfeststellungssignal wird über eine Leitung 17 einem ersten Verzögerungsglied 18 zugeführt, das bevorzugt von einem FIFO-Element gebildet ist. Das im Verzögerungsglied 18 verzögerte interne Objektfeststellungssignal wird über eine Leitung 19 einer Überbrückungslogik 20 zugeführt.

Die Signale der Mutingsensoren 11 werden über eine Leitung 21 einer Erfassungseinheit 22 zugeführt. Dort wird erfasst, ob ein zulässiges Objekt mit den Mutingsensoren 11 detektiert wurde.

Die in der Erfassungseinheit 22 generierten Signale werden über ein optionales zweites Verzögerungsglied 23 einer Überbrückungseinheit 24 zugeführt.

Die Ausgangssignale der Überbrückungseinheit 24 werden einerseits über die Leitung 19 der Überbrückungslogik 20 und andererseits über einen Invertierer 25 der Überbrückungslogik 20 zugeführt.

Die Funktionsweise der Steuer- und Auswerteeinheit 13 gemäß Figur 5 wird anhand der Figuren 6a - 6d erläutert.

Mit den Signalen der Mutingsensoren 11 wird in der Erfassungseinheit 22 erfasst, ob ein zulässiges Objekt, insbesondere ein Transportgut 5 vorhanden ist oder nicht. Um das Transportgut 5 auch dann sicher zu detektieren, wenn dieses schräg verlaufend auf der Fördereinheit transportiert wird, wie Figur 7 zeigt, werden die Mutingsensoren 11 vorzugsweise nur innerhalb begrenzter Zeitfenster aktiviert.

Figur 6a zeigt das im Sicherheitssensor 6 generierte interne Objektfeststellungssignal in Form eines binären Schaltsignals. Sobald ein Objekt im Schutzfeld mit dem Sicherheitssensor 6 erkannt wird, wechselt der Schaltzustand des internen Objektfeststellungssignals von 0 auf 1, wie aus Figur 6a ersichtlich.

Figur 6b zeigt das mit dem ersten Verzögerungsglied 18 um das Zeitintervall Δt verzögerte Objektfeststellungssignal. Das Objektfeststellungssignal wirkt dabei derart, dass die in Figur 6c dargestellte Erfassung des Transportguts 5 in der Erfassungseinheit 22 abgeschlossen ist.

In der Erfassungseinheit 22 wird abhängig von der Erfassung des Transportguts 5 mit den Mutingsensoren 11 (Figur 6c) als Beeinflussungssignal ein Mutingsignal (Figur 6d) generiert, dessen Dauer die Dauer des Muting, das heißt die Überbrückung des Sicherheitssensors 6 vorgibt.

Mutingdauer wird mittels des zweiten Verzögerungsglieds 23 von einem definierten Zeitintervall Δt verzögert, wie Figur 6d zeigt.

Bei aktiviertem Muting, das heißt während der Zeitspanne, in welcher sich das Mutingsignal gemäß Figur 6d im Schaltzustand 1 befindet, wird durch eine logische UND-Verknüpfung des Mutingsignals mit dem internen Objektfeststellungssignal der Sicherheitssensor 6 überbrückt, in dem ein externes zum Sicherheitssensor 6 ausgegebenes externes Objektfeststellungssignal generiert wird. Dieses externe Objektfeststellungssignal steht der Ausgangsleitung 26 der Überbrückungslogik 20 an, das nicht mehr im Schaltzustand 1 (wie das interne Objektfeststellungssignal) ist sondern im Schaltzustand 0.

Bei nicht aktiviertem Muting wird das interne Objektfeststellungssignal als externes Objektfeststellungssignal ausgegeben, wodurch die Sicherheitsfunktion ausgelöst wird.

### Bezugszeichenliste

- (1): Überwachungseinrichtung
- (2): Anlage
- (3): Fördereinrichtung
- (4): Palette
- (5): Transportgut
- (6): Sicherheitssensor
- (7): Gehäuse
- (8): Lichtstrahl
- (9): Sender
- (10): Empfänger
- (11): Mutingsensor
- (12): Sendelichtstrahl
- (13): Steuer- und Auswerteeinheit
- (14): Ultraschallsensor
- (15): Ultraschallsender
- (16): Ultraschallwelle
- (17): Leitung
- (18): Verzögerungsglied
- (19): Leitung
- (20): Überbrückungslogik
- (21): Leitung
- (22): Erfassungseinheit
- (23): Verzögerungsglied
- (24): Überbrückungseinheit
- (25): Invertierer
- (26): Ausgangsleitung
- (F): Bewegungsrichtung

## Patentansprüche

1. Überwachungseinrichtung (1) mit einem Sicherheitssensor (6), welcher zur Überwachung eines Schutzfeldes derart ausgebildet ist, dass bei einem im Schutzfeld registrierten Objekteingriff ein internes Objektfeststellungssignal generiert wird, wobei wenigstens eine ein Beeinflussungssignal generierende Signalquelle vorgesehen ist, **dadurch gekennzeichnet, dass** eine Steuer- und Auswerteeinheit (13) vorgesehen ist, mittels derer das interne Objektfeststellungssignal derart verzögerbar ist, dass dieses abhängig vom Beeinflussungssignal beeinflussbar ist, und dass das beeinflusste interne Objektfeststellungssignal als externes Objektfeststellungssignal am Sicherheitssensor (6) ausgebbar ist.

2. Überwachungseinrichtung (1) nach Anspruch 1, **dadurch gekennzeichnet, dass** das Beeinflussungssignal ein Mutingsignal ist, mittels dessen das interne Objektfeststellungssignal überbrückt ist.

3. Überwachungseinrichtung (1) nach einem der Ansprüche 1 oder 2, **dadurch gekennzeichnet, dass** mittels des Sicherheitssensors (6) ein in einer Ebene verlaufendes Schutzfeld überwacht wird.

4. Überwachungseinrichtung (1) nach einem der Ansprüche 1 - 3, **dadurch gekennzeichnet, dass** der Sicherheitssensor (6) ein Flächendistanzsensor oder ein Lichtvorhang ist.

5. Überwachungseinrichtung (1) nach einem der Ansprüche 1 - 4, **dadurch gekennzeichnet, dass** als Signalquelle wenigstens ein Mutingsensor (11) vorgesehen ist.

6. Überwachungseinrichtung (1) nach Anspruch 5, **dadurch gekennzeichnet, dass** der oder jeder Mutingsensor (11) in der Ebene des Schutzfelds angeordnet ist.

7. Überwachungseinrichtung (1) nach einem der Ansprüche 5 oder 6, **dadurch gekennzeichnet, dass** der Mutingsensor (11) vom Sicherheitssensor (6) oder von Elementen des Sicherheitssensors (6) gebildet ist.

8. Überwachungseinrichtung (1) nach einem der Ansprüche 5 oder 6, **dadurch gekennzeichnet, dass** der oder jeder Mutingsensor (11) in einem Gehäuse (7a, 7b) des Sicherheitssensors (6) angeordnet ist.

9. Überwachungseinrichtung (1) nach einem der Ansprüche 1 - 8, **dadurch gekennzeichnet, dass** die Signalquelle von einem optischen Sensor, einem Ultraschallsensor oder einem Radarsensor gebildet ist.

10. Überwachungseinrichtung (1) nach einem der Ansprüche 1 - 9, **dadurch gekennzeichnet, dass** die Signalquelle von einem Distanzsensor, einer Lichtschranke, einer Reflexionslichtschranke, einem Lichtvorhang oder einem Codeleser gebildet ist.

11. Überwachungseinrichtung (1) nach einem der Ansprüche 1 - 10, **dadurch gekennzeichnet, dass** mittels der oder aller Signalquellen zulässige Objekte erfasst werden.

12. Überwachungseinrichtung (1) nach Anspruch 11, **dadurch gekennzeichnet, dass** bei Erkennung eines zulässigen Objekts ein Beeinflussungssignal generiert wird.

13. Überwachungseinrichtung (1) nach einem der Ansprüche 1 - 12, **dadurch gekennzeichnet, dass** in der Steuer- und Auswerteeinheit (13) das Beeinflussungssignal verzögerbar ist.

14. Überwachungseinrichtung (1) nach einem der Ansprüche 1 - 13, **dadurch gekennzeichnet, dass** als Mittel zur Signalverzögerung ein FIFO-Element vorgesehen ist.

15. Überwachungseinrichtung (1) nach einem der Ansprüche 1 - 14, **dadurch gekennzeichnet, dass** Mittel zur Funktionsprüfung der oder jeder Signalquellen vorgesehen sind.

## Claims

1. A monitoring device (1) with a safety sensor (6), which is designed to monitor a protective field in such a way that an internal object detection signal is generated when an object is detected in the protective field, wherein at least one signal source generating an influencing signal is provided, **characterised in that** a control and evaluation unit (13) is provided, by means of which the internal object detection signal can be delayed in such a way that it can be influenced as a function of the influencing signal, and **in that** the influenced internal object detection signal can be output as an external object detection signal at the safety sensor (6).

2. A monitoring device (1) according to claim 1, **characterised in that** the influencing signal is a muting signal by means of which the internal object detection signal is bridged.

3. A monitoring device (1) according to one of claims 1 or 2, **characterised in that** a protective field extending in a plane is monitored by means of the safety sensor (6).

4. A monitoring device (1) according to one of claims 1-3, **characterised in that** the safety sensor (6) is an area distance sensor or a light curtain.

5. A monitoring device (1) according to one of claims 1-4, **characterised in that** at least one muting sensor (11) is provided as a signal source.

6. A monitoring device (1) according to claim 5, **characterised in that** the or each muting sensor (11) is arranged in the plane of the protective field.

7. A monitoring device (1) according to one of claims 5 or 6, **characterised in that** the muting sensor (11) is formed by the safety sensor (6) or by elements of the safety sensor (6).

8. A monitoring device (1) according to one of claims 5 or 6, **characterised in that** the or each muting sensor (11) is arranged in a housing (7a, 7b) of the safety sensor (6).

9. A monitoring device (1) according to one of claims 1 - 8, **characterised in that** the signal source is formed by an optical sensor, an ultrasonic sensor or a radar sensor.

10. A monitoring device (1) according to one of claims 1-9, **characterised in that** the signal source is formed by a distance sensor, a light barrier, a retro-reflective light barrier, a light curtain or a code reader.

11. A monitoring device (1) according to one of claims 1-10, **characterised in that** admissible objects are detected by means of the or all signal sources.

12. A monitoring device (1) according to claim 11, **characterised in that** an influence signal is generated when a permissible object is detected.

13. A monitoring device (1) according to one of claims 1-12, **characterised in that** the influencing signal can be delayed in the control and evaluation unit (13).

14. A monitoring device (1) according to one of claims 1 - 13, **characterised in that** a FIFO element is provided as a means for signal delay.

15. A monitoring device (1) according to one of claims 1-14, **characterised in that** means are provided for testing the function of said or each signal source.

## Revendications

1. Dispositif de surveillance (1) avec un capteur de sécurité (6), conçu pour surveiller un champ de protection de manière à générer un signal de détection d'objet interne lorsqu'un objet est détecté dans le champ de protection, dans lequel au moins une source de signal générant un signal d'influence est prévue, **caractérisé par** la présence d'une unité de commande et d'évaluation (13) permettant de retarder le signal de détection d'objet interne de manière à l'influencer en fonction du signal d'influence, et d'émettre le signal de détection d'objet interne influencé en tant que signal de détection d'objet externe au niveau du capteur de sécurité (6).

2. Dispositif de surveillance (1) selon la revendication 1, **caractérisé par le fait que** le signal d'influence est un signal d'inhibition au moyen duquel le signal de détection d'objet interne est ponté.

3. Dispositif de surveillance (1) selon l'une des revendications 1 ou 2, **caractérisé par** la surveillance d'un champ de protection s'étendant dans un plan au moyen du capteur de sécurité (6).

4. Dispositif de surveillance (1) selon l'une des revendications 1 à 3, **caractérisé par le fait que** le capteur de sécurité (6) est un capteur de distance ou un rideau lumineux.

5. Dispositif de surveillance (1) selon l'une des revendications 1 à 4, **caractérisé par le fait qu'**au moins un capteur d'inhibition (11) est fourni comme source de signal.

6. Dispositif de surveillance (1) selon la revendication 5, **caractérisé par le fait que** le ou chaque capteur d'inhibition (11) est disposé dans le plan du champ de protection.

7. Dispositif de surveillance (1) selon l'une des revendications 5 ou 6, **caractérisé par le fait que** le capteur d'inhibition (11) est formé par le capteur de sécurité (6) ou par des éléments du capteur de sécurité (6).

8. Dispositif de surveillance (1) selon l'une des revendications 5 ou 6, **caractérisé par le fait que** le ou chaque capteur d'inhibition (11) est disposé dans un boîtier (7a, 7b) du capteur de sécurité (6).

9. Dispositif de surveillance (1) selon l'une des revendications 1 à 8, **caractérisé par le fait que** la source du signal est constituée d'un capteur optique, d'un capteur ultrasonique ou d'un capteur radar.

10. Dispositif de surveillance (1) selon l'une des revendications 1 à 9, **caractérisé par le fait que** la source du signal est constituée d'un capteur de distance, d'une barrière lumineuse, d'une barrière lumineuse rétroréfléchissante, d'un rideau lumineux ou d'un lecteur de code.

11. Dispositif de surveillance (1) selon l'une des revendications 1 à 10, **caractérisé par le fait que** les objets admissibles sont détectés au moyen de la ou de toutes les sources de signaux.

12. Dispositif de surveillance (1) selon la revendication 11, **caractérisé par le fait qu'**un signal d'influence est généré lorsqu'un objet autorisé est détecté.

13. Dispositif de surveillance (1) selon l'une des revendications 1 à 12, **caractérisé par le fait que** le signal d'influence peut être retardé dans l'unité de commande et d'évaluation (13).

14. Dispositif de surveillance (1) selon l'une des revendications 1 à 13, **caractérisé par le fait qu'**un élément FIFO est prévu comme moyen de retarder le signal.

15. Dispositif de surveillance (1) selon l'une des revendications 1 à 14, **caractérisé en ce que** des moyens sont prévus pour tester la fonction de ladite ou de chaque source de signal.
